# EUROPEAN PATENT SPECIFICATION

(11) **EP 2 845 840 B1**
(45) Date of publication and mention of the grant of the patent: **15.02.2017**
(21) Application number: 14182375.7
(22) Date of filing: 27.08.2014
(51) Int. Cl.: C03B 33/027, C03B 33/03, C03B 33/07, C03B 33/037

(54) **MACHINE AND METHOD FOR PERFORMING CUTTING OPERATIONS ON LAMINATED-GLASS PLATES**
VORRICHUNG UND VERFAHREN ZUM SCHNEIDEN VON VERBUNDENEN GASSCHEIBEN
MACHINE ET PROCÉDÉ POUR EFFECTUER DES OPÉRATIONS DE DÉCOUPE SUR DES FEUILLES DE VERRE LAMINÉES

(30) Priority: 10.09.2013 IT TO20130732
(43) Date of publication of application: 11.03.2015
(73) Proprietor: Biesse S.p.A., 61122 Chiusa di Ginestreto (Pesaro Urbino) (IT)
(72) Inventor: Aimar, Giacomo, 61122 Chiusa di Ginestreto (Pesaro Urbino) (IT); Sideri, Paolo, 61122 Chiusa di Ginestreto (Pesaro Urbino) (IT)
(74) Representative: Notaro, Giancarlo

(56) References cited:
- EP-A1- 2 113 492
- EP-A1- 2 583 951
- ES-A1- 2 265 244
- US-A1- 2005 178 258

## Description

The present invention relates to machines for performing cutting operations on laminated-glass plates, of the type comprising:
- a fixed workbench, defining a support plane for receiving a plate to be processed,
- a fixed cutting bridge on which an upper carriage, carrying an upper incision tool, and a lower carriage, carrying a lower incision tool, are movably mounted in a first horizontal direction parallel to the longitudinal direction of the cutting bridge, said cutting bridge being provided with actuating means for driving movement of said carriages along said first horizontal direction,
- means for moving said plate on the fixed workbench in a second horizontal direction orthogonal to said first horizontal direction,
- rotation means for causing the plate, or a portion thereof cut by said cutting bridge, to rotate on said support plane, said rotation means comprising:
- a first gripping member for gripping a first portion of the plate adjacent to the rear edge of said plate, with reference to the advancement direction of the plate on the support plane, and
- a second gripping member for gripping a second portion of the plate which is spaced apart from said first portion,
- said first and second gripping members being respectively movable along said first and second horizontal directions,
- wherein said first gripping member comprises a suction-cup element configured to engage one face of the plate adjacent to said rear edge, said suction-cup element being supported by one of said carriages so that it is freely rotatable around a vertical axis and being further movable by actuating means along said vertical axis between a position for engaging the plate and a position spaced apart from the plate,
- wherein said second gripping member comprises a suction-cup element configured to engage one face of the plate at said second plate portion spaced apart with respect to the first plate portion engaged by said first gripping member,

the machine further comprising an electronic control unit configured to drive a synchronous movement of said first gripping member and said second gripping member respectively along the first horizontal direction and along the second horizontal direction to obtain a rotation of the plate on the support plane.

Machines of the type referred to above are known, for example, from document ES 2 265 244. Similar machines are known from EP 2 583 951 A1 (the latter being of the present Applicant), EP 2 113 492 A1 and US 2005/178258 A1. These documents also show solutions in which at least one of the two suction-cup gripping members which are used to rotate the glass plate is replaced by an engagement element which is moved along a respective horizontal direction in order to engage an edge of the plate and cause the plate to rotate in cooperation with the other gripper or engagement member. In any case, all the above mentioned known solutions achieve the complete rotation of the plate by providing two plate gripping or engagement members which are moved along two respective horizontal and mutually orthogonal directions until the very end of the operation for reaching a desired rotated position of the glass plate.

In order to increase versatility and reduce overall dimensions, process times and cost of the machine, while rendering the machine capable of operating in an optimal way in any operating condition, the present invention provides a machine of the type described above and further characterized in that:
- said rotation means further comprise an engagement element which in operation is in a stationary position, in the form of a roller or pad, for rolling or sliding engagement with said rear edge of the plate, said engagement element being movable between an inoperative position and an operative position, projecting upwardly with respect to the support plane, and
in that said electronic control unit is programmed to control said rotation means in such a way that in a first phase of the operation for rotation of said plate the plate is rotated by engaging the first and the second suction-cup gripping members on the plate and by simultaneously moving the first and the second suction-cup gripping members along said first and second horizontal directions, respectively, whilst in a second phase of the operation for rotation of said plate the second suction-cup gripping member is disengaged from the plate, and said engagement element is brought to its operative position, whereby the rotation of the plate is completed by moving only the first suction-cup gripping member along the first horizontal direction, while using said engagement element as a stationary guiding support for said rear edge of the plate during rotation of the plate.

As can be clearly seen from the foregoing, by "rear edge of the plate" the edge of the plate is meant which is at the rear of the plate, with respect to the advancement direction along the workbench, in the position of the plate before that rotation of the plate is initiated.

As also can be clearly seen from the foregoing, in the machine of the invention a first part of the rotation of the plate is carried out with the aid of both the first and second suction-cup gripping members, so that the rear edge of the plate is brought to a laterally facing rotated position and passes forwardly beyond the position of the stationary engagement element, whereupon rotation of the plate is completed without the need of using the second suction-cup gripping member, but simply by moving said first suction-cup gripping member along the first horizontal direction in order to drive the rotation, while using said engagement element as a stationary guiding support for said rear edge of the plate during the rotation of the plate.

In one embodiment, said operative position of the engagement element is adjustable along the second horizontal direction, said engagement element remaining stationary in its adjusted position during rotation of the plate.

In an alternative embodiment, a plurality of engagement elements are provided which are uniformly distributed along the second horizontal direction at different distances from the cutting line defined by the cutting bridge, said engagement elements being selectively engagable on the rear edge of glass plates of different sizes. In this case said electronic control unit is programmed to activate only one of said engagement elements at a time, depending upon the characteristics of the plate to be rotated.

In a preferred embodiment, the first suction-cup gripping member further comprises a second element, co-operating with the first suction-cup element, designed to engage the face of the plate opposite to the one engaged by the first suction-cup element, in a point adjacent to the rear edge. The co-operating element is carried by a respective carriage in such a way that it is freely rotatable about a vertical axis coinciding with the vertical axis of rotation of the first suction-cup element, and is displaceable by actuator means along the vertical axis between a position of engagement of the plate and a position at a distance from the plate.

In this preferred embodiment, the co-operating element is preferably itself a suction-cup element. In one variant, the co-operating element is a pressing element designed to press the plate against the first suction-cup gripping member that engages the opposite face of the plate.

Preferably, the first suction-cup gripping member is carried by the lower carriage of the cutting bridge and is adapted for engaging the lower face of the plate, whilst the co-operating element is carried by the upper carriage of the cutting bridge and is adapted for engaging the upper face of the plate.

In one embodiment, the second suction-cup gripping member is carried by an auxiliary bridge movable underneath the suppot plane downstream of the fixed cutting bridge and is designed to engage the plate through a longitudinal slit of the support plane. The auxiliary bridge is movable in the direction of advance of the plate for displacing the plate in this direction.

Preferably, the auxiliary bridge is a positioning abutment bridge, provided with a number of abutment elements which can be raised above the support plane through slots provided in the workbench and configured so as to stop the plate at a position corresponding to the required cutting length, said second suction-cup gripping member being an additional element with respect to said stop elements carried by said positioning abutment bridge.

Furthermore, the means for actuating axial displacement of the first suction-cup gripping member and the means for actuating axial displacement of the co-operating element are chosen from among a hydraulic actuator, a pneumatic actuator, and an electromechanical actuator comprising an electric motor and an external-thread/internal-thread system governed by the electric motor.

In addition, the present invention also provides a method for performing cutting operations on a laminated glass plate as set forth in claim 11.

Thanks to the aforesaid characteristics of the invention, it is possible to obtain rotation of the plate also when the rear edge of the plate is initially positioned upstream of the cutting line defined by the aforesaid cutting bridge.

Furthermore, the machine according to the present invention can be built with a reduced dimension in the longitudinal direction X of the workbench since the use of the stationary engagement element enables the length of travel of the second suction-cup gripping member in the direction X to be limited, which also leads to a considerable reduction of the costs for production, delivery, and installation of the machine. Of course, a shorter machine means also less occupied space in the plant where the machine is used.

The use of the stationary engagement element for guiding rotation of the plate in the second phase of the rotation process also enables a reduction of the process time, in so far as, by deactivating the second suction-cup gripping member before the end of the operation for rotation of the plate, it is possible to reposition the positioning abutment bridge for the subsequent measuring operation, so as to perform this repositioning operation while the operation for rotation of the plate is still ongoing.

The invention will now be described, purely by way of non-limiting example, with reference to the annexed plates of drawings, wherein:
- Figure 1 is a diagrammatic perspective view of a machine for cutting a laminated glass plate;
- Figures 2 and 3 are enlargements of some details of the machine of Figure 1;
- Figures 4 and 5 are, respectively, a top plan view and a schematic view of a portion of the machine according to the present invention; and
- Figures 6-12 are top plan views and/or schematic views that show in sequence the steps of the operation for rotation of the plate.

In the ensuing description, various specific details are illustrated, aimed at providing an in-depth understanding of the embodiments. The embodiments may be obtained without one or more of the specific details, or with other methods, components, materials, etc. In other cases, known structures, costructional details, materials, or operations are not illustrated or described in detail in so far as they can be obtained in any known way and also in so far as they do not fall, taken in themselves, within the scope of the present invention.

The operation of cutting plates of laminated glass is very complex. These plates, the use of which is increasingly widespread where it is necessary to guarantee that the glass does not shatter in the case of accidental impact, comprise an upper glass plate, a lower glass plate and an intermediate sheet or film of synthetic plastic material, usually polyvinyl butyral (PVB). The terms "upper" and "lower" are used herein with reference to the position of the plate when lying on the workbench of the cutting machine.

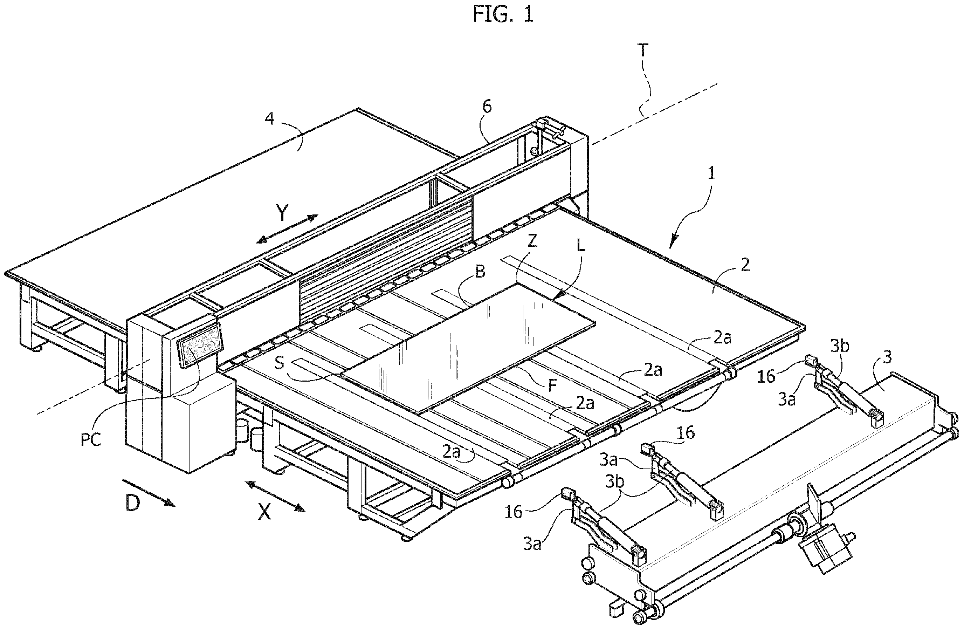

Automatic cutting of plates of laminated glass is obtained with machines of the type illustrated in Figure 1, comprising a bench 1, defining a support plane 2 for the plates L of glass, a fixed bridge 6, and a plate-feeding board 4. Cutting of the plate L of laminated glass is obtained with a first step of scoring of the upper and lower plates of glass, a step of breaking each of the upper and lower plates of glass into two separate portions, a step of softening of the plastic sheet and a step of detachment or tearing of the plastic sheet to obtain a total separation of the two portions of the plate of laminated glass. On account of the corresponding complexity of these operations, the bridge 6 is fixed with respect to the workbench in so far as it has a very complex and heavy structure.

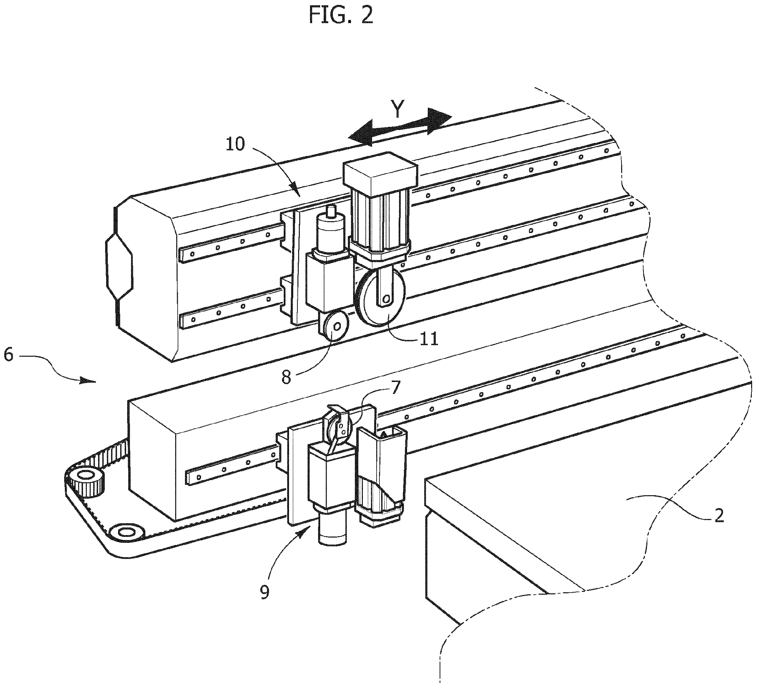

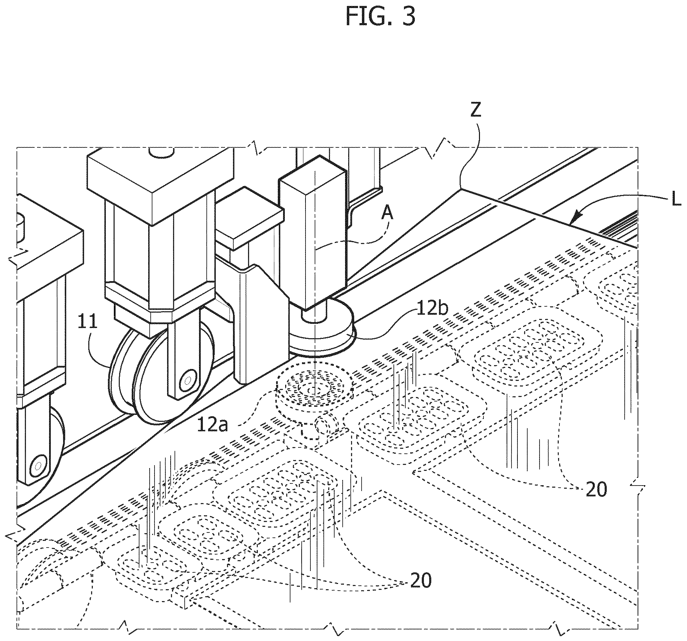

An exemplary embodiment of the devices provided on the fixed bridge 6 is visible in annexed Figure 2. The fixed bridge 6 comprises scoring wheel tools 7 and 8 arranged, respectively, beneath and above the support plane 2, which are carried by two carriages 9 and 10, respectively, that are able to slide on the bridge 6 in the horizontal direction Y, parallel to the longitudinal extension of the bridge. The bridge 6 further comprises means for breaking the upper plate and the lower plate, which include, for example, a breaking wheel of the type designated by reference 11 in Figure 2 and Figure 3. Likewise provided are means (not illustrated) for heating the plastic film, which intervene following upon the breaking operation and before the above mentioned detachment step.

As a consequence of the aforesaid structure and arrangement, the above machines are able to perform cutting of plates of laminated glass only along a straight line defined by the longitudinal direction of the fixed bridge 6. The plate must thus be rotated in different positions underneath the cutting bridge 6 to perform rectilinear cuts along its different sides. For instance, in order to cut a starting plate a number of times to obtain smaller plates, the plate is divided into a number of transverse strips and after cutting of each strip the latter is rotated through 90° for dividing it into a number of parts with successive cutting operations.

In the ensuing description, reference will be made to a machine for cutting plates of glass, in particular for laminated-glass plates, of the type illustrated in Figures 1, 2 and 3. The same references that are used in these figures will hence be used hereinafter to designate the parts of the machine in common that remain unvaried, whereas new references will be used for the additional or modified parts.

The machine according to the present invention comprises a fixed workbench 1, defining a support plane 2 that is to receive the plate L to be machined and a fixed cutting bridge 6, on which an upper carriage 10 and a lower carriage 9 are mounted so as to be movable in the direction Y parallel to the longitudinal direction of the cutting bridge 6. The cutting bridge 6 is moreover provided with actuator means (not illustrated) for moving the carriages 9 and 10 in the direction Y.

In the present description and in the annexed drawings, the costructional details of the cutting machine, of the carriages 9 and 10 and the way in which they are slidably mounted along the cutting bridge 6, of the scoring wheels 7 and 8, and of the breaking wheels 11 and of the way in which they are movably mounted on the respective carriages 9 and 10 are not illustrated, in so far as they can be made in any known way and also in so far as they do not fall, taken in themselves, within the scope of the present invention.

The same applies to the way in which the movements of the carriages 9 and 10, and of the wheels 7, 8, and 11 are governed. These movements, in conformance with the known art, are governed by means of respective electric motors and control transmissions (not illustrated or described). Furthermore, once again in conformance with the known art, the electric motors that drive the various movable parts of the machine are controlled by programmable electronic control means to enable execution of predetermined processing cycles on the plates L to be processed.

With particular reference to Figure 3, the machine according to the invention comprises a first suction-cup gripping member 12a and a co-operating element 12b, which is also in form of a suction-cup, which are carried respectively by the aforesaid lower carriage 9 and upper carriage 10. The two suction cups 12a and 12b are coaxial and can turn freely about a vertical axis A. The suction cups are in communication with a vacuum source (not illustrated in the drawings). The lower suction cup 12a engages the lower face of the plate L at a point adjacent to the rear edge B thereof, whereas the upper suction cup 12b engages the upper face. The two suction cups are carried by the respective carriages in such a way that they are freely rotatable about the vertical axis A,. The suction cups are moreover displaceable by actuator means along the vertical axis A between a position of engagement of the plate and a position at a distance from the plate. As indicated, the two suction cups 12a and 12b are mounted on the carriages 9 and 10, so as to be displaced in the direction Y, i.e. along the cutting line T, together with these carriages, by actuator means for moving the carriages (not illustrated in the figures).

The means for actuating the vertical axial displacement of the suction-cup element 12a and the means for actuating axial displacement of the co-operating element 12b are chosen from among a hydraulic actuator, a pneumatic actuator, and an electromechanical actuator comprising an electric motor and an external-thread/internal-thread system governed by the electric motor.

The maximum dimension of the suction-cup 12a is defined by the empty space available between the support plane 2 and the plate-feeding board 4, respectively upstream and downstream of the cutting line T defined by the cutting bridge 6.

In an alternative embodiment (not illustrated in the figures), it is possible to use a second element 12b, co-operating with the suction-cup element 12a, which is not in form of a suction-cup, but is simply a pressing element designed to engage the face of the plate L opposite to the one engaged by the suction-cup element 12a.

In a way known per se, the machine according to the present invention further comprises a plurality of suction cups 20 arranged on the edge of the support plane 2, and aligned in the direction Y, parallel and adjacent to the cutting line. The suction cups 20 are in communication with a vacuum source (not illustrated). The suction cups 20 have the purpose of blocking the plate L during the cutting and breaking operations.

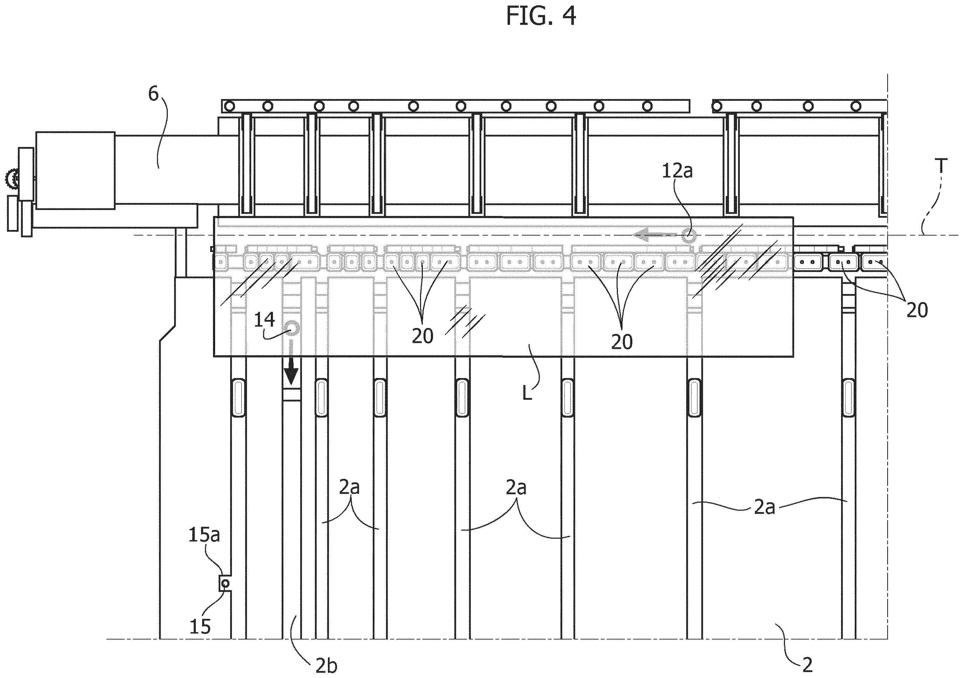

With reference to Figure 4, the machine according to the present invention comprises a second suction-cup gripping member 14 designed to engage the plate L at a point spaced apart from the first suction-cup gripping member 12a, so that the two gripping members 12a and 14 engage portions of the plate L which are spaced apart from each other.

As indicated, the first gripping member 12a is movable in the direction Y of the cutting bridge 6 along with carriage 9. The second gripping member 14 is instead movable in the longitudinal direction X of the support plane 2 of the plate L, through means which will be illustrated hereinafter. Directions X,Y are mutually orthogonal horizontal directions.

The machine 1 according to the present invention further comprises an electronic control unit PC designed to govern a synchronous movement of the first gripping member 12a and of the second gripping member 14 in the direction Y and in the direction X, respectively, to obtain a rotation of the plate L on the support plane 2.

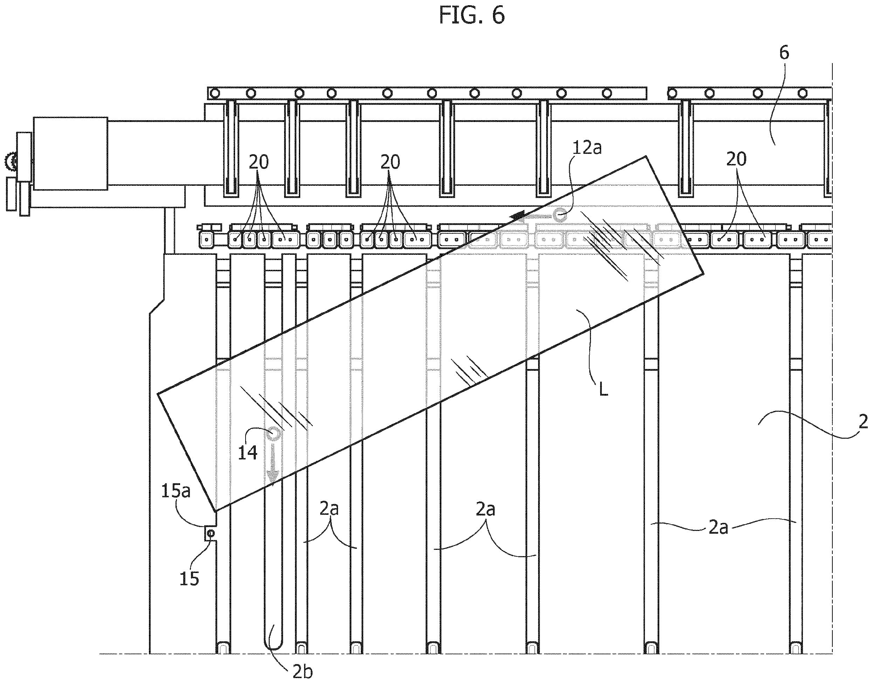

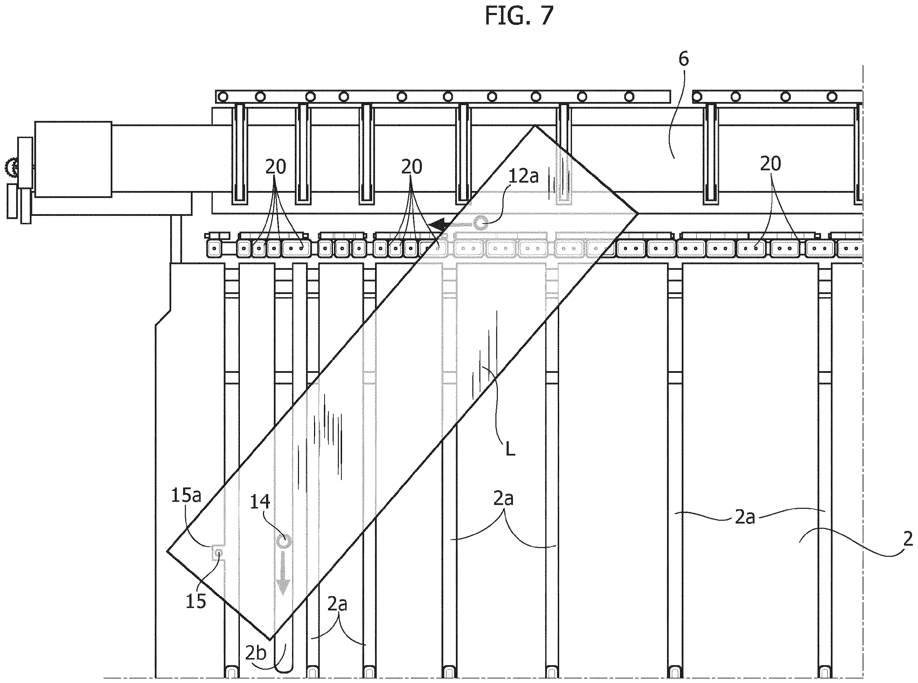

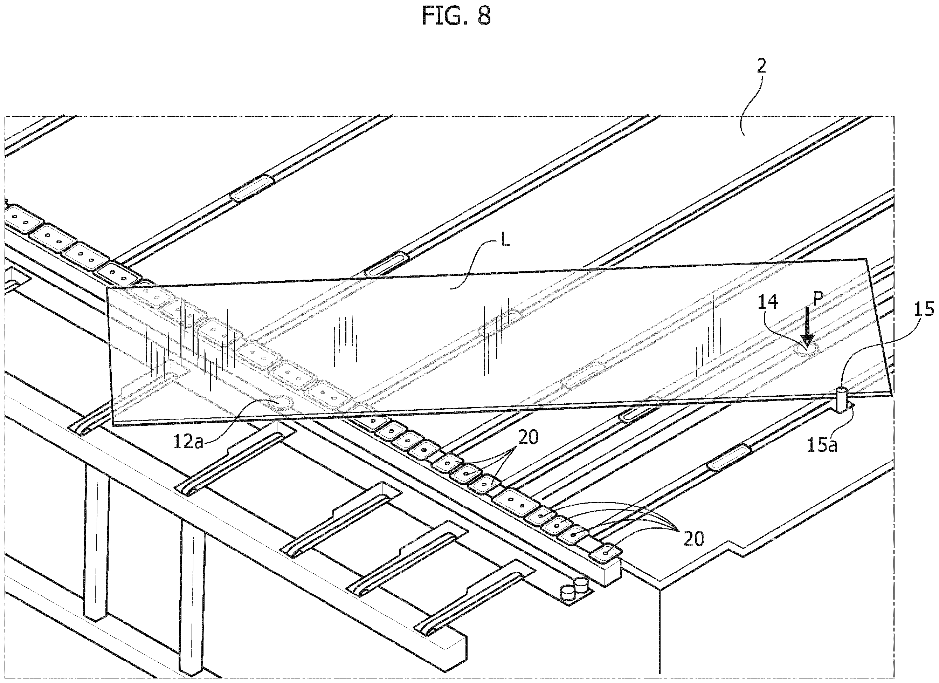

Once again with reference to Figure 4, the rotation means further comprise an engagement element 15, which in operation is in a stationary position, for rolling or sliding contact with the rear edge B of the plate L during rotation thereof. The stationary engagement element may be in the form of a freely rotatable roller or in the form of a pad. In the case of the exemplary embodiment illustrated in the drawings the element 15 is a roller having a stationary axis and displaceable vertically between an inoperative position (see Figures 6 and 7), lowered with respect to the support plane 2, and an operating position (see Figure 8), projecting upwardly with respect to the support plane 2. The aforesaid roller engagement element 15 is received in a seat 15a made on the support plane 2.

The electronic control unit PC is programmed for controlling the rotation means 12a,14 and 15 in such a way that in a first step of the operation for rotation of the plate L the plate is rotated by engaging the first suction-cup gripping member 12a and the second suction-cup gripping member 14 on spaced apart portions of the plate and by simultaneously displacing the first suction-cup gripping member 12a and the second suction-cup gripping member 14 in the directions Y and X, respectively.

As a result of this first phase of rotation the rear edge B of the plate is brought to a laterally facing rotated position until when the rear edge B passes forwardly beyond the position of the stationary engagement element 15. At that point, the second suction-cup gripping member 14 is disengaged from the plate L and the roller engagement element 15 is brought to its raised operative position (see Figures 8-10), whereupon a second step of rotation can be performed, in which the 90° rotation of the plate is completed without the need of the second suction-cup gripping member, by moving said first suction-cup gripping member (which is still engaged on the plate L) along direction Y in order to drive the rotation, while using the engagement element 15 as a stationary guiding support for the rear edge B of the plate during the rotation of the plate.

In one embodiment (not illustrated in the drawings), the operative position of the engagement element 15 is adjustable along the longitudinal direction X of the workbench, the engagement element 15 remaining always stationary in its adjusted position during rotation of the plate. This solution is useful for processing plates of different sizes.

In an alternative embodiment, a plurality of engagement elements 15 are provided which are uniformly distributed along direction X at different distances from the cutting line T defined by the cutting bridge, said engagement elements 15 being selectively engagable on the rear edge of glass plates of different sizes. In this case the electronic control unit is programmed to activate only one of said engagement elements 15 at a time, depending upon the characteristics of the plate to be rotated.

In the illustrated embodiment, the gripping member 14 is carried by an auxiliary bridge 3 movable underneath the support plane 2, downstream of the fixed cutting bridge 6, and is designed to engage the plate through a longitudinal slit 2b of said support plane 2. The auxiliary bridge 3 is translatable in the direction X of advancement of the plate for displacing the plate in this direction.

The auxiliary bridge may be, for example, a positioning abutment bridge 3, in itself known, typically used in order to position the plate L for cutting a strip to a desired size starting from a semifinished plate.

As is known (see Figure 1), the positioning abutment bridge 3 comprises a plurality of articulated arms 3a, carrying abutment members 16, upon which the front edge F of the plate is brought to bear so as to position the plate in order to cut it to the desired size. The abutment elements 16 can be raised above the support plane 2, through slits 2a provided in the workbench 1, with the aid of actuators 3b also carried by bridge 3 in order to stop a plate in the position corresponding to the desired cutting length when the plate is caused to advance by conveyor belts (not shown) associated to the feeding board 4.

The details of construction of the abutment bridge 3 and the means for moving the bridge 3 along direction X are not illustrated herein, since they can be made in any known way and do not form part, taken alone, of the present invention.

The second suction-cup gripping member 14 is additionally provided on the auxiliary bridge 3 and can be supported by an articulated arm with associated actuator, similar to arm 3a and actuator 3b of any abutment member 16. The suction-cup member 14 can be raised through a purposely provided longitudinal slit 2b of the workbench. In an alternative embodiment, the longitudinal slit 2b could coincide with one of the slits 2a provided for members 16.

As indicated, the second suction-cup gripping member 14 goes into action in a first step of the operation for rotation of the plate L, whereas in the second step it is deactivated and the auxiliary bridge 3 can be repositioned for the next cutting operation, which will start as soon as the second step of the operation of rotation is concluded.

Figure 4 illustrates the condition before start of the operation for rotation of a laminated glass plate L obtained after a cutting operation from a longer starting plate. Plate L represents a front portion cut from the starting plate. After the cutting operation, the remaining rear portion of the starting plate is moved backwardly on the plate feeding board 4, so as not to hinder the operation for rotation of plate L. This remaining portion of the starting plate is not shown in the drawings.

At the beginning of the rotation process, plate L has its rear edge B positioned on the cutting line T (or upstream of this) and the suction cups 12a and 14 are in their resting condition where they are lowered and detached from the plate L.

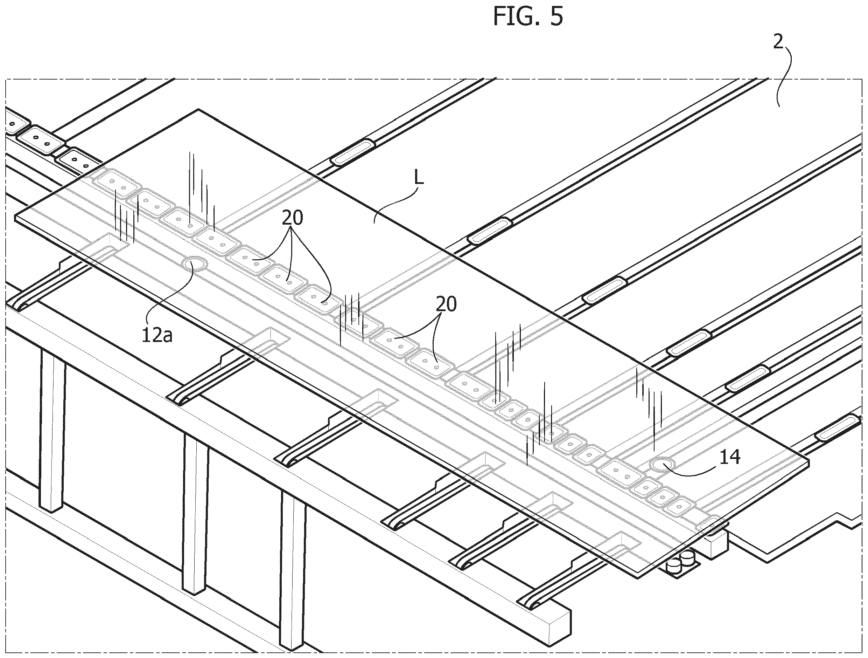

Figure 5 illustrates the initial condition of the operation for rotation of the plate L, with the suction cups 12a and 14 that are brought to their raised operating condition to engage the lower surface of the plate.

Figures 6 and 7 show subsequent conditions of the first step of the rotation process, in which both gripping members 12a and 14 are active, whereas the engagement element 15 is in its lowered inoperative condition.

Figure 8 illustrates a condition intermediate between the first step and the second step of the operation for rotation of the plate. In particular, Figure 8 shows the instant at which the second gripping member 14 is disengaged from the lower face of the plate L (arrow P), and the roller engagement element 15 is brought to its raised operating position.

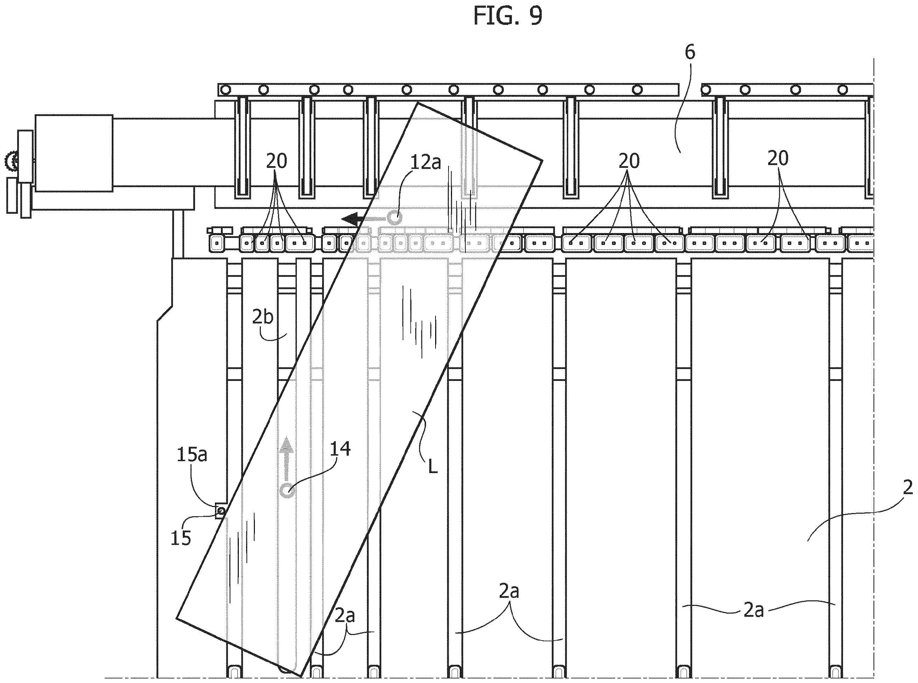

Figure 9 shows the second step of the operation for rotation of the plate, where the rotation of the plate L is completed only as a result of the movement of the first suction-cup gripping member 12a (along direction Y), i.e. without the need of using the gripping member 14, while using the roller engagement element 15 as a stationary guiding support for the rear edge B of the plate. In particular, in the condition of Figure 9 the second gripping member 14 is brought back by the auxiliary bridge 3 towards its resting position. In this way, the positioning abutment bridge 3 may be positioned for the subsequent cutting operation while rotation of the plate L is still going on, thereby eliminating the dead times for repositioning the abutment bridge that would be necessary in case the suction-cup 14 had to be engaged on the glass plate until the end of the operation for rotation of the plate.

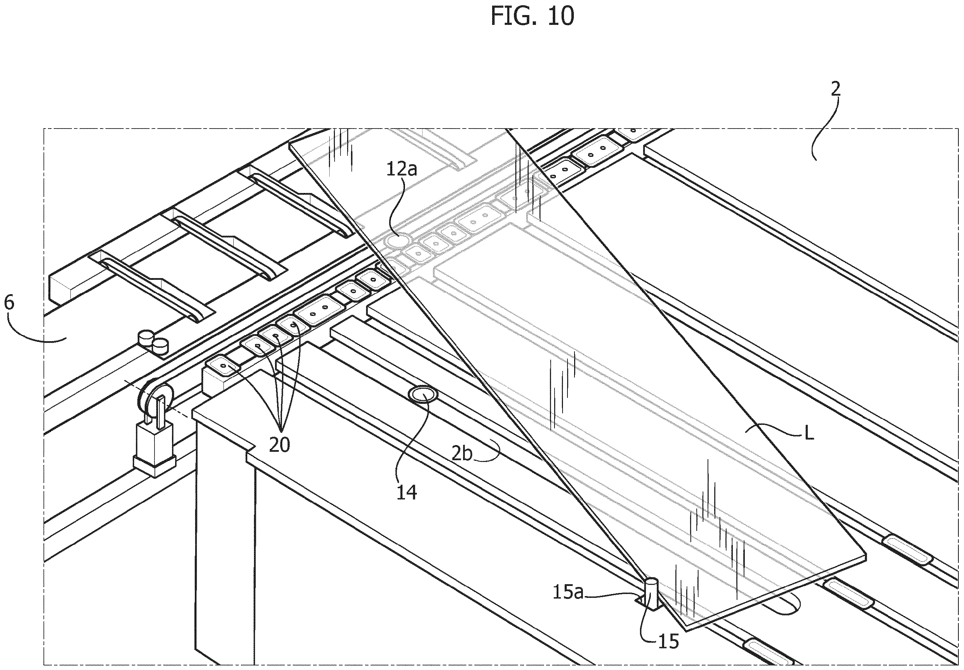

Figure 10 shows, from another angle, the plate in the condition illustrated in Figure 9. Visible in Figure 10 is the roller engagement element 15 in its operating position where it projects upwardly above the support plane 2, this element functioning as a guide support for the rear edge B of the plate during rotation.

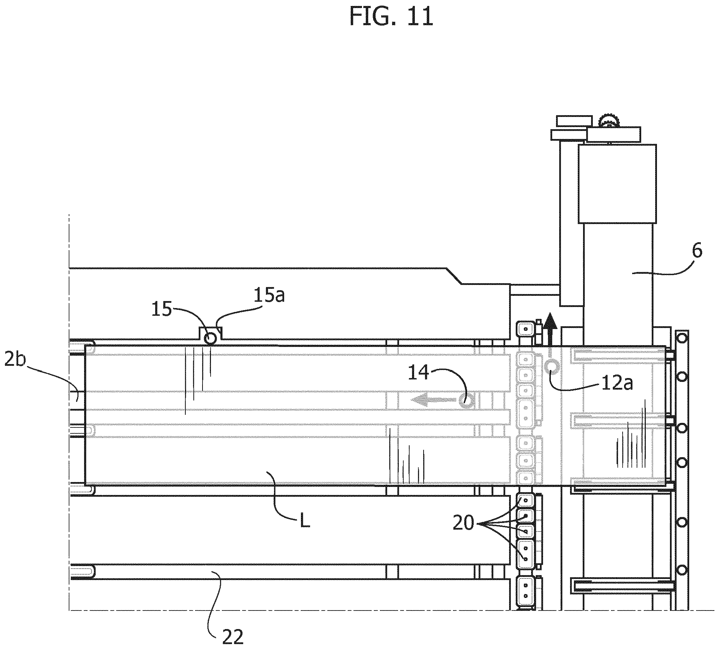

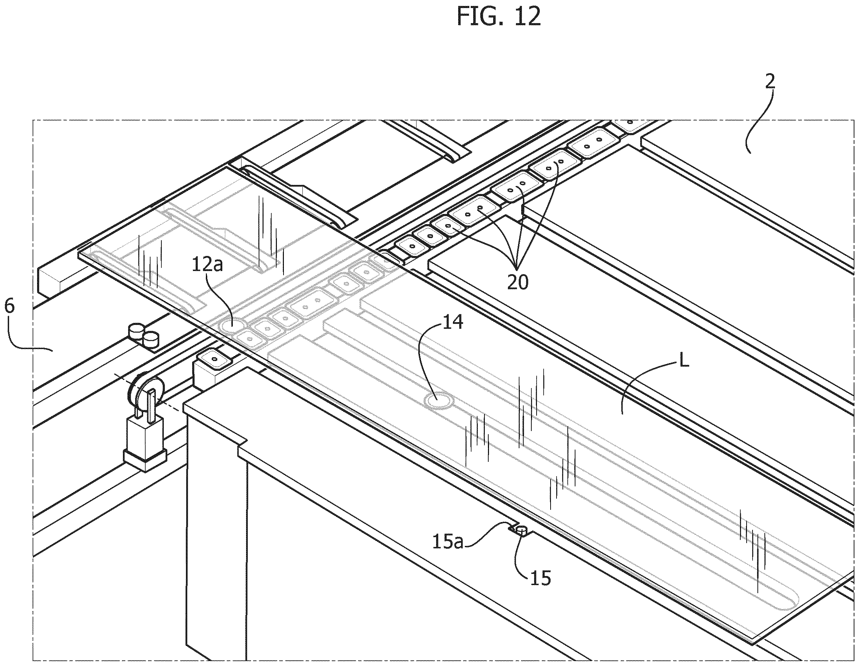

Finally, Figures 11 and 12 show two different views of the final condition, where the plate is completely rotated through 90° with respect to the starting condition illustrated in Figure 4. In this condition, the plate is released and the first gripping member 12a and the roller 15 are brought into their lowered resting condition.

For sake of drawing simplification, in Figures 4 to 12 the gripping member 12b co-operating with gripping member 12a has not been illustrated. However, each of the first and second gripping members 12, 14 might also be in form of a single suction-cup adapted to engage the glass plate only on one face thereof.

It is to be noted that the above described structure and arrangement can be used to rotate a glass plate by any angle, i.e. also by an angle different from 90°.

Naturally, without prejudice to the principle of the invention, the details of construction and the embodiments may vary, even significantly, with respect to what is described and illustrated herein purely by way of non-limiting example, without thereby departing from the scope of the invention as defined by the ensuing claims.

## Claims

1. Machine for performing cutting operations on laminated glass plates (L), said machine comprising:
- a fixed workbench (1), defining a support plane (2) for receiving a plate (L) to be processed,
- a fixed cutting bridge (6) on which an upper carriage (10), carrying an upper incision tool (8), and a lower carriage (9), carrying a lower incision tool (7), are movably mounted in a first horizontal direction (Y) parallel to the longitudinal direction of the cutting bridge (6), said cutting bridge (6) being provided with actuating means for driving movement of said carriages (9, 10) along said first horizontal direction (Y),
- means for moving said plate (L) on the fixed workbench (1) in a second horizontal direction (X) orthogonal to said first horizontal direction (X),
- rotation means (12a, 12b, 14, 15) for causing the plate (L), or a portion thereof cut by said cutting bridge (6), to rotate on said support plane (2), said rotation means comprising:
- a first gripping member (12a) for gripping a first portion of the plate adjacent to the rear edge (B) of said plate (L), with reference to the advancement direction of the plate on the support plane, and
- a second gripping member (14) for gripping a second portion of the plate which is spaced apart from said first portion,
- said first and second gripping members (12a, 14) being respectively movable along said first and second horizontal directions (Y, X),
- wherein said first gripping member (12a) comprises a suction-cup element (12a) configured to engage one face of the plate adjacent to said rear edge (B), said suction-cup element (12a) being supported by one of said carriages (9, 10) so that it is freely rotatable around a vertical axis (A) and is further movable by actuating means along said vertical axis (A) between a position for engaging the plate (L) and a position spaced apart from the plate,
- wherein said second gripping member (14) comprises a suction-cup element configured to engage one face of the plate at said second plate portion spaced apart from the first plate portion engaged by said first gripping member (12a),
said machine further comprising an electronic control unit (PC) configured to drive a synchronous movement of said first gripping member (12a) and said second gripping member (14) respectively along the first horizontal direction (Y) and along the second horizontal direction (X) to obtain a rotation of the plate on the support plane (2),
said machine being **characterized in that**:
- said rotation means further comprise an engagement element (15) which in operation is in a stationary position, in the form of a roller or pad, for rolling or sliding engagement with said rear edge (B) of the plate (L), said engagement element (15) being movable between an inoperative position and an operative position projecting upwardly with respect to the support plane, and
**in that** said electronic control unit (PC) is programmed to control said rotation means in such a way that in a first phase of the operation for rotation of said plate the plate is rotated by engaging the first and the second suction-cup gripping members (12a, 14) on the plate (L) and by simultaneously moving the first (12a) and the second suction-cup gripping members (14) along said first and second horizontal directions (Y, X), respectively, whilst in a second phase of the operation for rotation of said plate (L) the second suction-cup gripping member (14) is disengaged from the plate, and said engagement element (15) is brought to its operative position, whereby the rotation of the plate is completed by moving only the first suction-cup gripping member (12a) along the first horizontal direction (Y), while using said engagement element (15) as a stationary guiding support for said rear edge (B) of the plate (L) during rotation of the plate.

2. Machine according to claim 1, **characterized in that** said operative position of the engagement element (15) is adjustable along the second horizontal direction (X), said engagement element (15) remaining stationary in its adjusted position during rotation of the plate.

3. Machine according to claim 1, **characterized in that** a plurality of engagement elements (15) are provided which are uniformly distributed along the second horizontal direction (X) at different distances from the cutting line (T) defined by the cutting bridge (6), said engagement elements (15) being selectively engageable on the rear edge (B) of glass plates of different sizes, and **in that** said electronic control unit (PC) is programmed to activate only one of said engagement elements (15) at a time, depending upon the characteristics of the plate to be rotated.

4. Machine according to any of the previous claims, **characterized in that** said first suction-cup gripping member (12a) further comprises a second element (12b) cooperating with said first suction-cup element (12a) and configured to engage the face of the plate (L) opposite to that engaged by the first suction-cup element (12a) adjacent to said rear edge (B), said cooperating element (12b) being carried by a respective carriage (10) so that it is freely rotatable around a vertical axis coincident with the vertical axis (A) of rotation of said first suction-cup element (12a) and being movable by actuating means along said vertical axis (A) between a position for engaging the plate (L) and a position spaced apart from the plate.

5. Machine according to claim 4, **characterized in that** said cooperating element (12b) is also a suction-cup element.

6. Machine according to claim 4, **characterized in that** said cooperating element (12b) is a pressing element configured to press the plate (L) against the first suction-cup gripping member (12a) which engages the opposite face of the plate (L).

7. Machine according to any of the previous claims 4-6, **characterized in that** said first suction-cup gripping member (12a) is carried by the lower carriage (9) of the cutting bridge (6) and is provided for engaging the lower face of the plate (L), whereas said cooperating element (12b) is carried by the upper carriage (10) of the cutting bridge (6) and is provided for engaging the upper face of the plate (L).

8. Machine according to any of the previous claims, **characterized in that** said second suction-cup gripping member (14) is carried by an auxiliary bridge (3) which is movable below the support plane (2) downstream of the fixed cutting bridge (6), said second suction-cup gripping member (14) being configured to engage the plate through a longitudinal slot (2b) of said workbench (1), said auxiliary bridge (3) being movable in the direction of advancement of the plate (L) for moving the plate in said direction.

9. Machine according to claim 8, **characterized in that** said auxiliary bridge (3), is a positioning abutment bridge, provided with a number of abutment elements (16) which can be raised above the support plane (2) through slots (2a) provided in the workbench (1) and configured so as to stop the plate (L) at a position corresponding to the required cutting length, said second suction-cup gripping member (14) being an additional element with respect to said stop elements (16) carried by said positioning abutment bridge (3).

10. Machine according to any of the previous claims, **characterized in that** the actuating means for actuating the axial movement of said suction-cup element (12a) and the actuating means for driving the axial movement of said cooperating element (12b) are chosen among a hydraulic actuator, a pneumatic actuator, and an electro-mechanical actuator comprising an electric motor and a screw-end-nut system driven by the electric motor.

11. Method for performing cutting operations on a laminated glass plate (L) disposed on a working plane, comprising the steps of providing rotation means (12a, 12b, 14, 15) to rotate the plate (L), or a portion of the plate cut therefrom, in which said rotation means comprise first and second suction-cup gripping members (12a, 14) for gripping two spaced apart portions of the plate (L), said gripping members (12a, 14) being movable in two orthogonal horizontal directions (Y, X), in such a way that the plate can be rotated by engaging the first and the second suction-cup gripping members (12a, 14) on the plate (L) and by moving simultaneously the first and the second suction-cup gripping members (12a, 14) along said two orthogonal directions (Y, X), respectively,
**characterized in that** the method also comprises providing an engagement element (15) which in operation is in a stationary position, in the form of a roller or pad, for rolling or sliding engagement with said rear edge (B) of the plate (L), said engagement element (15) being movable between an inoperative position and an operative position, projecting upwardly with respect to the support plane,
in such a way that in a first phase of the operation for rotation of said plate (L) the plate is rotated by engaging the first and the second suction-cup gripping members (12a, 14) on the plate (L) and by simultaneously moving the first and the second suction-cup gripping members (12a, 14) along said two orthogonal horizontal directions (Y, X), respectively, whilst in a second phase of the operation for rotation of said plate (L), the second suction-cup gripping member (14) is disengaged from the plate (L) and said engagement element (15) is brought to its operative position, whereby the rotation of the plate is completed by moving only the first suction-cup gripping member (12a) along the respective horizontal direction (Y), while using said engagement element (15) as a stationary guiding support for said rear edge of the plate during rotation of the plate (L).

## Patentansprüche

1. Maschine zum Ausführen von Schneidevorgängen auf Platten aus laminiertem Glas (L), wobei die Maschine umfasst:
- einen ortsfesten Arbeitstisch (1), der eine Auflageebene (2) festlegt, um eine Platte (L) aufzunehmen, die bearbeitet werden soll,
- eine ortsfeste Schneidebrücke (6), auf der ein oberer Schlitten (10), der ein oberes Schneidewerkzeug (8) trägt, sowie ein unterer Schlitten (9), der ein unteres Schneidewerkzeug (7) trägt, so angebracht sind, dass sie in einer ersten horizontalen Richtung (Y) bewegt werden können, die parallel zur Längsrichtung der Schneidebrücke (6) verläuft, wobei die Schneidebrücke (6) mit einer Stelleinrichtung versehen ist, um die Schlitten (9, 10) entlang der ersten horizontalen Richtung (Y) in Bewegung zu setzen,
- eine Einrichtung, um die Platte (L) auf dem ortsfesten Arbeitstisch (1) in eine zweite horizontale Richtung (X) zu bewegen, die senkrecht zur ersten horizontalen Richtung (X) verläuft,
- eine Dreheinrichtung (12a, 12b, 14, 15), um die Platte (L) oder einen Teil davon, der von der Schneidebrücke (6) abgeschnitten wurde, auf der Aufnahmeebene (2) in Drehung zu versetzen, wobei die Dreheinrichtung umfasst:
- ein erstes Greifelement (12a), um einen ersten Teil der Platte neben der hinteren Kante (B) der Platte (L) bezogen auf die Vorschubrichtung der Platte auf der Aufnahmeebene zu ergreifen, und
- ein zweites Greifelement (14), um einen zweiten Teil der Platte zu ergreifen, der vom ersten Teil beabstandet ist,
- wobei das erste bzw. das zweite Greifelement (12a, 14) entlang der ersten und der zweiten horizontalen Richtung (Y, X) bewegt werden können,
- wobei das erste Greifelement (12a) ein Saugkappen-Element (12a) umfasst, das so ausgebildet ist, dass es mit einer Fläche der Platte neben der hinteren Kante (B) in Eingriff tritt, wobei das Saugkappen-Element (12a) von einem der Schlitten (9, 10) so getragen wird, dass es sich um eine vertikale Achse (A) frei drehen kann und weiters von einer Stelleinrichtung entlang dieser vertikalen Achse (A) zwischen einer Stellung, in der es mit der Platte (L) in Eingriff tritt, und einer Stellung bewegt werden kann, in der es von der Platte beabstandet ist,
- wobei das zweite Greifelement (14) ein Saugkappen-Element (14) umfasst, das so ausgebildet ist, dass es mit einer Fläche der Platte am zweiten Plattenteil in Eingriff tritt, der vom ersten Plattenteil beabstandet ist, mit dem das erste Greifelement (12a) in Eingriff tritt,
wobei die Maschine weiters eine elektronische Steuereinheit (PC) umfasst, die so ausgebildet ist, dass sie eine synchrone Bewegung des ersten Greifelements (12a) bzw. des zweiten Greifelements (14) entlang der ersten horizontalen Richtung (Y) sowie entlang der zweiten horizontalen Richtung (X) steuert, um eine Drehung der Platte auf der Aufnahmeebene (2) hervorzurufen,
wobei die Maschine **dadurch gekennzeichnet ist, dass**:
- die Dreheinrichtung weiters ein Eingreifelement (15) umfasst, das sich im Betrieb in einer stationären Position befindet und die Form einer Rolle oder einer Stütze umfasst, um mit der hinteren Kante (B) der Platte (L) rollend oder gleitend in Eingriff zu treten, wobei das Eingreifelement (15) zwischen einer Ruhestellung und einer Betriebsstellung bewegt werden kann, in der es im Hinblick auf die Aufnahmeebene nach oben aufragt, und
dass die elektronische Steuereinheit (PC) so programmiert ist, dass in einer ersten Phase des Vorgangs, mit dem die Platte gedreht wird, die Platte dadurch gedreht wird, dass das erste und das zweite Saugkappen-Greifelement (12a, 14) mit der Platte (L) in Eingriff treten, wobei gleichzeitig das erste (12a) und das zweite Saugkappen-Greifelement (14) entlang der ersten bzw. der zweiten horizontalen Richtung (Y, X) bewegt werden, während in einer zweiten Phase des Vorgangs, mit dem die Platte (L) gedreht wird, das zweite Saugkappen-Greifelement (14) aus der Platte ausgekuppelt wird und das Eingreifelement (15) in seine Betriebsstellung gebracht wird, womit die Drehung der Platte dadurch fertiggestellt wird, dass nur das erste Saugkappen-Greifelement (12a) entlang der ersten horizontalen Richtung (Y) bewegt wird, wogegen das Eingreifelement (15) während der Drehung der Platte als stationäre Führungsstütze für die hintere Kante (B) der Platte (L) verwendet wird.

2. Maschine gemäß Anspruch 1, **dadurch gekennzeichnet, dass** die Betriebsstellung des Eingreifelements (15) entlang der zweiten horizontaalen Richtung (X) eingestellt werden kann, wobei das Eingreifelement (15) während der Drehung der Platte in dieser eingestellten Stellung stationär bleibt.

3. Maschine gemäß Anspruch 1, **dadurch gekennzeichnet, dass** eine Vielzahl von Eingreifelementen (15) vorgesehen ist, die entlang der zweiten horizontalen Richtung (X) in verschiedenen Abständen von der Schneidelinie (T) gleichmäßig verteilt sind, die von der Schneidebrücke (6) festgelegt wird, wobei die Eingreifelemente (15) wahlweise mit der hinteren Kante (B) der verschieden großen Glasplatten in Eingriff gebracht werden können, und dass die elektronische Steuerstufe (PC) so programmiert ist, dass gleichzeitig nur eines der Eingreifelemente (15) in Betrieb steht, wobei dies von den Eigenschaften der Platte abhängt, die gedreht werden soll.

4. Maschine gemäß irgendeinem der bisherigen Ansprüche, **dadurch gekennzeichnet, dass** das erste Saugkappen-Greifelement (12a) weiters ein zweites Element (12b) umfasst, das mit dem ersten Saugkappen-Element (12a) zusammenwirkt und so ausgebildet ist, dass es mit der Fläche der Platte (L) in Eingriff tritt, die gegenüber jener Fläche liegt, mit der das erste Saugkappen-Element (12a) neben der hinteren Kante (B) in Eingriff tritt, wobei das zusammenwirkende Element (12b) von einem entsprechenden Schlitten (10) so getragen wird, dass es sich um eine vertikale Achse frei drehen kann, die mit der vertikalen Drehachse (A) des ersten Saugkappen-Elements (12a) übereinstimmt, und von einer Stelleinrichtung entlang der vertikalen Achse (A) zwischen einer Stellung, in der es mit der Platte (L) in Eingriff tritt, und einer Stellung bewegt werden kann, die von der Platte beabstandet ist.

5. Maschine gemäß Anspruch 4, **dadurch gekennzeichnet, dass** das zusammenwirkende Element (12b) ebenfalls ein Saugkappen-Element ist.

6. Maschine gemäß Anspruch 4, **dadurch gekennzeichnet, dass** das zusammenwirkende Element (12b) ein Anpresselement ist, das so ausgebildet ist, dass es die Platte (L) gegen das erste Saugkappen-Greifelement (12a) presst, das mit der gegenüberliegende Fläche der Platte (L) in Eingriff steht.

7. Maschine gemäß irgendeinem der bisherigen Ansprüche 4-6, **dadurch gekennzeichnet, dass** das erste Saugkappen-Greifelement (12a) vom unteren Schlitten (9) der Schneidebrücke (6) getragen wird, wobei es so vorgesehen ist, dass es mit der unteren Fläche der Platte (L) in Eingriff tritt, während das zusammenwirkende Element (12b) vom oberen Schlitten (10) der Schneidebrücke (6) getragen wird und so vorgesehen ist, dass es mit der oberen Fläche der Platte (L) in Eingriff tritt.

8. Maschine gemäß irgendeinem der bisherigen Ansprüche, **dadurch gekennzeichnet, dass** das zweite Saugkappen-Greifelement (14) von einer Zusatzbrücke (3) getragen wird, die unter der Aufnahmeebene (2) stromabwärts der ortsfesten Schneidebrücke (6) bewegt werden kann, wobei das zweite Saugkappen-Greifelement (14) so ausgebildet ist, dass es durch einen Längsschlitz (2b) im Arbeitstisch (1) mit der Platte in Eingriff tritt, wobei die Zusatzbrücke (3) in der Vorschubrichtung der Platte (L) bewegt werden kann, um die Platte in dieser Richtung zu bewegen.

9. Maschine gemäß Anspruch 8, **dadurch gekennzeichnet, dass** die Zusatzbrücke (3) eine Einstell/Anschlag-Brücke ist, die mit einer Anzahl von Anschlag-Elementen (16) versehen ist, die über die Aufnahmeebene (2) durch Schlitze (2a) angehoben werden können, die im Arbeitstisch (1) vorgesehen sind, wobei sie so ausgebildet sind, dass sie die Platte (L) in einer Stellung anhalten, die der geforderten Schneidelänge entspricht, wobei das zweite Saugkappen-Greifelement (14) ein zusätzliches Element zu den Anschlag-Elementen (16) ist, die von der Einstell/Anschlag-Brücke (3) getragen werden.

10. Maschine gemäß irgendeinem der bisherigen Ansprüche, **dadurch gekennzeichnet, dass** die Stelleinrichtung, mit der die Axialbewegung des Saugkappen-Elements (12a) betätigt wird, sowie die Stelleinrichtung für den Antrieb der Axialbewegung des zusammenwirkenden Elements (12b) unter einem hydraulischen Stellglied, einem pneumatischen Stellglied und einem elektromechanischen Stellglied ausgewählt werden, das einen Elektromotor und ein Schnecken/Mutter-System umfasst, das vom Elektromotor angetrieben wird.

11. Verfahren zum Ausführen von Schneidevorgängen auf einer Platte aus laminiertem Glas (L), die auf einer Arbeitsebene angeordnet ist, wobei das Verfahren folgende Schritte umfasst: Vorsehen einer Dreheinrichtung (12a, 12b, 14, 15), um die Platte (L) oder einen Teil der Platte, der von ihr abgeschnitten wurde, in Drehung zu versetzen, wobei die Dreheinrichtung ein erstes und ein zweites Saugkappen-Greifelement (12a, 14) umfasst, um zwei voneinander beabstandete Teile der Platte (L) zu ergreifen, wobei die Greifelemente (12a, 14) in zwei aufeinander senkrechte horizontale Richtungen (Y, X) so bewegt werden können, dass die Platte dadurch in Drehung versetzt werden kann, dass das erste und das zweite Saugkappen-Greifelement (12a, 14) mit der Platte (L) in Eingriff treten, wobei das erste bzw. das zweite Saugkappen-Greifelement (12a, 14) gleichzeitig entlang der beiden zueinander senkrechten Richtungen (Y, X) bewegt werden,
**dadurch gekennzeichnet, dass** das Verfahren weiters das Vorsehen eines Eingreifelements (15) umfasst, das sich im Betrieb in einer stationären Stellung befindet und die Form einer Rolle oder einer Stütze besitzt, um mit der hinteren Kante (B) der Platte (L) rollend oder gleitend in Eingriff zu treten, wobei das Eingreifelement (15) zwischen einer Ruhestellung und einer Betriebsstellung bewegt werden kann, in der es im Hinblick auf die Aufnahmeebene nach oben aufragt,
so dass in einer ersten Phase des Vorgangs, mit dem die Platte (L) gedreht wird, die Platte dadurch gedreht wird, dass das erste und das zweite Saugkappen-Element (12a, 14) mit der Platte (L) in Eingriff treten, wobei gleichzeitig das erste und das zweite Saugkappen-Greifelement (12a, 14) entlang der beiden aufeinander senkrecht stehenden horizontalen Richtungen (Y, X) bewegt werden, während in einer zweiten Phase des Vorgangs, mit dem die Platte (L) gedreht wird, das zweite Saugkappen-Greifelement (14) aus der Platte (L) ausgekuppelt wird und das Eingreifelement (15) in seine Betriebsstellung gebracht wird, womit die Drehung der Platte dadurch fertiggestellt wird, dass nur das erste Saugkappen-Greifelement (12a) entlang der entsprechenden horizontalen Richtung (Y) bewegt wird, während das Eingreifelement (15) während der Drehung der Platte (L) als stationäre Führungsstütze für die hintere Kante der Platte verwendet wird.

## Revendications

1. Machine pour effectuer des opérations de coupe sur des plaques (L) de verre feuilleté, ladite machine comprenant :
- un établi fixe (1), définissant un plan de support (2) pour recevoir une plaque (L) à traiter,
- un pont de coupe fixe (6) sur lequel un chariot supérieur (10), portant un outil d'incision supérieur (8), et un chariot inférieur (9), portant un outil d'incision inférieur (7), sont montés, de manière mobile, dans une première direction horizontale (Y) parallèle à la direction longitudinale du pont de coupe (6), ledit pont de coupe (6) étant muni de moyens d'actionnement pour entraîner le mouvement desdits chariots (9, 10) le long de ladite première direction horizontale (Y),
- des moyens pour déplacer ladite plaque (L) sur l'établi fixe (1) dans une deuxième direction horizontale (X) orthogonale à ladite première direction horizontale (X),
- des moyens de rotation (12a, 12b, 14, 15) pour mettre en rotation, la plaque (L), ou une partie de celle-ci coupée par ledit pont de coupe (6), sur ledit plan de support (2), lesdits moyens de rotation comprenant :
- un premier élément de préhension (12a) pour saisir une première partie de la plaque adjacente au bord arrière (B) de ladite plaque (L), en référence à la direction d'avancement de la plaque sur le plan de support, et
- un deuxième élément de préhension (14) pour saisir une deuxième partie de la plaque qui est espacée de ladite première partie,
- lesdits premier et deuxième éléments de préhension (12a, 14) étant respectivement mobiles le long desdites première et deuxième directions horizontales (Y, X),
- où ledit premier élément de préhension (12a) comprend un élément ventouse (12a) configuré pour se mettre en prise avec une face de la plaque adjacente audit bord arrière (B), ledit élément ventouse (12a) étant supporté par l'un desdits chariots (9, 10) de sorte qu'il puisse tourner librement autour d'un axe vertical (A) et est en outre mobile par des moyens d'actionnement le long dudit axe vertical (A) entre une position de mise en prise avec la plaque (L) et une position espacée de la plaque,
- où ledit deuxième élément de préhension (14) comprend un élément ventouse configuré pour se mettre en prise avec une face de la plaque au niveau de ladite deuxième partie de plaque espacée de la première partie de plaque en prise avec ledit premier élément de préhension (12a),
ladite machine comprenant en outre une unité de commande électronique (PC) configurée pour entraîner un mouvement synchrone dudit premier élément de préhension (12a) et dudit deuxième élément de préhension (14) respectivement le long de la première direction horizontale (Y) et le long de la deuxième direction horizontale (X) pour obtenir une rotation de la plaque sur le plan de support (2),
ladite machine étant **caractérisée en ce que** :
- lesdits moyens de rotation comprennent en outre un élément de mise en prise (15) qui, lors du fonctionnement, se trouve dans une position stationnaire, sous forme d'un rouleau ou d'un patin, pour une mise en prise par coulissement ou roulement avec ledit bord arrière (B) de la plaque (L), ledit élément de mise en prise (15) étant mobile entre une position de repos et une position de fonctionnement faisant saillie vers le haut par rapport au plan de support, et
**en ce que** ladite unité de commande électronique (PC) est programmée pour commander lesdits moyens de rotation de manière à ce que, dans une première phase de l'opération de rotation de ladite plaque, la plaque soit mise en rotation en mettant en prise les premier et deuxième éléments de préhension à ventouses (12a, 14) sur la plaque (L) et en déplaçant simultanément les premier (12a) et deuxième (14) éléments de préhension à ventouses le long desdites première et deuxième directions horizontales (Y, X), respectivement, tandis que, dans une deuxième phase de l'opération de rotation de ladite plaque (L), le deuxième élément de préhension à ventouse (14) est séparé de la plaque, et ledit élément de mise en prise (15) est ramené à sa position de fonctionnement, moyennant quoi la rotation de la plaque est terminée en déplaçant seulement le premier élément de préhension à ventouse (12a) le long de la première direction horizontale (Y), tout en utilisant ledit élément de mise en prise (15) en tant que support de guidage stationnaire pour ledit bord arrière (B) de la plaque (L) pendant la rotation de la plaque.

2. Machine selon la revendication 1, **caractérisée en ce que** ladite position de fonctionnement de l'élément de mise en prise (15) est réglable le long de la deuxième direction horizontale (X), ledit élément de mise en prise (15) restant stationnaire dans sa position réglée pendant la rotation de la plaque.

3. Machine selon la revendication 1, **caractérisée en ce qu'**une pluralité d'éléments de mise en prise (15) sont prévus, lesquels éléments sont répartis uniformément le long de la deuxième direction horizontale (X) à des distances différentes de la ligne de coupe (T) définie par le pont de coupe (6), lesdits éléments de mise en prise (15) pouvant être mis en prise sélectivement sur le bord arrière (B) de plaques de verre de différentes tailles, et **en ce que** ladite unité de commande électronique (PC) est programmée pour activer un seul élément desdits éléments de mise en prise (15) une seule fois, en fonction des caractéristiques de la plaque devant être mise en rotation.

4. Machine selon l'une des revendications précédentes, **caractérisée en ce que** ledit premier élément de préhension à ventouse (12a) comprend en outre un deuxième élément (12b) coopérant avec ledit premier élément à ventouse (12a) et configuré pour se mettre en prise avec la face de la plaque (L) opposée à celle en prise avec le premier élément ventouse (12a) adjacente audit bord arrière (B), ledit élément coopérant (12b) étant porté par un chariot respectif (10) de sorte qu'il puisse tourner librement autour d'un axe vertical coïncident avec l'axe vertical (A) de rotation dudit premier élément ventouse (12a) et étant mobile par des moyens d'actionnement le long dudit axe vertical (A) entre une position de mise en prise avec la plaque (L) et une position espacée de la plaque.

5. Machine selon la revendication 4, **caractérisée en ce que** ledit élément coopérant (12b) est également un élément ventouse.

6. Machine selon la revendication 4, **caractérisée en ce que** ledit élément coopérant (12b) est un élément de pression configuré pour presser la plaque (L) contre le premier élément de préhension à ventouse (12a) qui est en prise avec la face opposée de la plaque (L).

7. Machine selon l'une des revendications précédentes 4 à 6, **caractérisée en ce que** ledit premier élément de préhension à ventouse (12a) est porté par le chariot inférieur (9) du pont de coupe (6) et est prévu pour se mettre en prise avec la face inférieure de la plaque (L), alors que ledit élément coopérant (12b) est porté par le chariot supérieur (10) du pont de coupe (6) et est prévu pour se mettre en prise avec la face supérieure de la plaque (L).

8. Machine selon l'une des revendications précédentes, **caractérisée en ce que** ledit deuxième élément de préhension à ventouse (14) est porté par un pont auxiliaire (3) qui est mobile sous le plan de support (2) en aval du pont de coupe fixe (6), ledit deuxième élément de préhension à ventouse (14) étant configuré pour se mettre en prise avec la plaque à travers une fente longitudinale (2b) dudit établi (1), ledit pont auxiliaire (3) étant mobile dans la direction d'avancement de la plaque (L) pour déplacer la plaque dans ladite direction.

9. Machine selon la revendication 8, **caractérisée en ce que** ledit pont auxiliaire (3), est un pont formant butée de positionnement, muni d'un certain nombre d'éléments de butée (16) qui peuvent être soulevés au-dessus du plan de support (2) à travers des fentes (2a) prévues dans l'établi (1) et configurés de manière à arrêter la plaque (L) à une position correspondant à la longueur de coupe requise, ledit deuxième élément de préhension à ventouse (14) étant un élément supplémentaire par rapport auxdits éléments d'arrêt (16) portés par ledit pont formant butée de positionnement (3).

10. Machine selon l'une quelconque des revendications précédentes, **caractérisée en ce que** les moyens d'actionnement pour activer le mouvement axial dudit élément ventouse (12a) et les moyens d'actionnement pour entraîner le mouvement axial dudit élément coopérant (12b) sont choisis parmi un actionneur hydraulique, un actionneur pneumatique et un actionneur électromécanique comprenant un moteur électrique et un système vis-écrou entraîné par le moteur électrique.

11. Procédé de réalisation d'opérations de coupe sur une plaque (L) de verre feuilleté disposée sur un plan de travail, comprenant les étapes consistant à fournir des moyens de rotation (12a, 12b, 14, 15) pour mettre en rotation la plaque (L), ou une partie de la plaque coupée de celle-ci, où lesdits moyens de rotation comprennent des premier et deuxième éléments de préhension à ventouses (12a, 14) pour saisir deux parties espacées de la plaque (L), lesdits éléments de préhension (12a, 14) étant mobiles dans deux directions horizontales orthogonales (Y, X), de manière à ce que la plaque puisse être mise en rotation en mettant en prise les premier et deuxième éléments de préhension à ventouses (12a, 14) sur la plaque (L) et en déplaçant simultanément les premier et deuxième éléments de préhension à ventouses (12a, 14) le long desdites deux directions orthogonales (Y, X), respectivement,
**caractérisé en ce que** le procédé comprend également le fait de fournir un élément de mise en prise (15) qui, lors du fonctionnement, se trouve dans une position stationnaire, sous forme d'un rouleau ou d'un patin, pour une mise en prise par coulissement ou roulement avec ledit bord arrière (B) de la plaque (L), ledit élément de mise en prise (15) étant mobile entre une position de repos et une position de fonctionnement, faisant saillie vers le haut par rapport au plan de support,
de manière à ce que, dans une première phase de l'opération de rotation de ladite plaque (L), la plaque est mise en rotation en mettant en prise les premier et deuxième éléments de préhension à ventouses (12a, 14) sur la plaque (L) et en déplaçant simultanément les premier et deuxième éléments de préhension à ventouses (12a, 14) le long desdites deux directions horizontales orthogonales (Y, X), respectivement, tandis que, dans une deuxième phase de l'opération de rotation de ladite plaque (L), le deuxième élément de préhension à ventouse (14) est séparé de la plaque (L) et ledit élément de mise en prise (15) est ramené à sa position de fonctionnement, moyennant quoi la rotation de la plaque est terminée en déplaçant seulement le premier élément de préhension à ventouse (12a) le long de la direction horizontale respective (Y), tout en utilisant ledit élément de mise en prise (15) en tant que support de guidage stationnaire pour ledit bord arrière de la plaque pendant la rotation de la plaque (L).
